# EUROPEAN PATENT SPECIFICATION

(11) **EP 2 701 503 B1**
(45) Date of publication and mention of the grant of the patent: **14.10.2015**
(21) Application number: 12720677.9
(22) Date of filing: 26.04.2012
(51) Int. Cl.: A01N 25/08, A01N 25/28, A01N 43/40, A01N 59/16, A01P 1/00, A01P 3/00, C09D 5/14

(54) **SUSTAINED RELEASE SYSTEM FOR BIOCIDAL METAL COMPLEXES**
SYSTEM ZUR VERZÖGERTEN FREISETZUNG VON BIOZIDEN METALL-KOMPLEXEN
SYSTÈME POUR LA LIBÉRATION PROLONGÉE DES COMPLEXES MÉTALLIQUES BIOCIDES

(30) Priority: 26.04.2011 EP 11163678
(43) Date of publication of application: 05.03.2014
(73) Proprietor: Nederlandse Organisatie voor toegepast- natuurwetenschappelijk onderzoek TNO, 2595 DA 's-Gravenhage (NL)
(72) Inventor: ERICH, Sebastiaan Joannes Franciscus, NL-2628 VK Delft (NL); EVERSDIJK, Jacobus, NL-2628 VK Delft (NL)
(74) Representative: Jansen, Cornelis Marinus
(86) International application number: PCT/NL2012/050279
(87) International publication number: WO 2012/148268

(56) References cited:
- WO-A1-2004/000953
- WO-A1-2009/072888
- US-A1- 2007 053 950
- US-A1- 2009 298 805
- GERSTEIN T: "CLEAR ZINC PYRITHIONE PREPARATIONS", JOURNAL OF THE SOCIETY COSMETIC CHEMISTS, SOCIETY OF COSMETIC CHEMISTS, US, vol. 23, 3 February 1972 (1972-02-03), pages 99-114, XP000672938, ISSN: 0037-9832

## Description

The invention is directed to sustained release systems, to methods for preparing a sustained release system, and to a material for construction comprising said sustained release system.

Sustained release of active compounds is applied in many technical fields. Most sustained release systems are formulated such that the active compound is embedded in a matrix material such that the active compound must find its way out of the matrix into the material for construction and subsequently into the environment.

One of the applications in which sustained release systems can be applied is in the field of construction materials. Bio-resistance of buildings and finishing materials usually requires addition of dedicated bioactive chemicals, such as biocides. There are two main reasons to add biocides to materials for constructions. First of all, micro-organisms negatively affect the durability of the material, i.e. induce biodegradation. Secondly, biocides are also used to prevent the growth of micro-organisms (algae, fungi and bacteria) that create unhealthy indoor environments or affect the aesthetic value of the materials. Especially in moist environments, such as in a bathroom or shower, microbial fouling can lead to undesirable staining. Removal of such microbial fouling is often not easy and frequently requires chemical that are environmentally harmful.

A promising class of biocides are metal chelate complexes, in particular metal pyrithione complexes. Sustained release of metal pyrithione complex biocides in a paint composition comprising a clay swelling agent has been disclosed in US-A-5 246 489. In accordance with the invention described therein, however, both components are separately included in the paint composition.

US2007/053950 discloses zinc pyrithione-containing microcapsules for use in coating materials. WO2004/000953 discloses zinc pyrithione-containing microcapsules for use in construction materials.

Intercalation of metal chelate complexes, such as pyrithione complexes, in clay for sustained release in construction material has been suggested in WO-A-2009/072888. However, the inventors found that such inclusion is very limited due to the low solubility of these metal chelate complexes in appropriate solvents, in particular complexes of pyrithione with polyvalent metals. For example, zinc pyrithione has a water solubility of 10-20 ppm at room temperature and pH 7, which increases to 35-50 ppm at pH 8. In ethanol, the solubility is 290 ppm, in acetone the solubility is 700 ppm, in benzene the solubility is 3-5 ppm, and in diethylether the solubility is 0 ppm. Due to this low solubility it is only possible to prepare sustained release systems having a relatively low content of the biocide. At the same time, the preparation of such sustained release systems comprising metal chelate complexes is typically accompanied with the substantial amounts of organic solvents. From an environmental point of view this is not desirable.

Hence, an objective of the invention is to provide a sustained release system comprising a considerable amount of one or more metal chelate complexes having one or more free coordination sites.

Further objective of the invention is to provide method of preparing a sustained release system with a considerable amount of one or more metal chelate complexes having one or more free coordination sites.

Yet a further objective of the invention is to provide a method of preparing a sustained release system which method requires a limited amount of solvent.

The inventors found that one or more of these objectives can, at least in part, be met by solubilising the one or more metal chelate complexes using a suitable solubilising agent.

Accordingly, in a first aspect the invention is directed to a sustained release system comprising a microparticle, said microparticle comprising an intercalation material and an amount of one or more metal chelate complexes intercalated in said intercalation material of more than 10 wt.%, based on the total weight of the intercalation material and the one or more metal chelate complexes together, wherein said one or more metal chelate complexes have one or more free coordination sites, wherein said intercalation material comprises an inorganic layered material, wherein the inorganic layered material is modified with one or more ionic organic modifier compounds, further comprising a solubilising agent for said metal chelate complex in an amount of at most 0.5 wt.% based on total weight of the microparticle.

By pre-treating the metal chelate complex with an appropriate solubilising agent it was found to be possible to prepare a sustained release system having a content of more than 10 wt.%, based on the total weight of matrix material and metal chelate complex together. At the same time, the preparation can be performed using a reduced amount of solvent. The sustained release system may be a controlled release system.

The term "sustained release" as used herein is meant to refer to release, which is not immediate release and is taken to encompass controlled release, sustained release, prolonged release timed release, retarded release, extended release, delayed release, *etc.*

The term "sustained release" indicates sustained release of at least part of the one or more metal chelate complexes, or the respective chelating ligands and/or metal ions. As known by the skilled person, "sustained release system" comprises sustained release compositions as well as and sustained release materials. A sustained release system is not necessarily particulate.

The term "microcapsule" as used herein comprises and is interchangeable with "microparticle". The term "microcapsule" as used herein is meant to refer to both microcapsules having a discrete microcapsule wall, and microcapsules wherein the internal phase constituents (including the one or more metal chelate complexes) are simply dispersed in the encapsulation material.

For sustained release systems comprising inorganic layered material as encapsulation material, the terms "encapsulation material" and "encapsulation" as used herein comprise and are interchangeable with "intercalation material" and "intercalation" respectively.

An encapsulation material comprising an inorganic layered material is referred to in this application as an intercalation material.

Encapsulation in the case of an encapsulation material comprising an inorganic layered material is referred to in this application as intercalation.

The encapsulation material acts as a matrix or retaining material for the metal chelate complex, for example because of a discrete microcapsule wall or by internal phase constituents, including the one or more metal chelate complexes, that may be dispersed in it.

The term "solubilising agent" as used herein indicates a compound or mixture capable of increasing the solubility of the one or more metal chelate complexes in a solvent.

Dimensions of microcapsules are typically of the order of 1 - 1000 µm depending on the encapsulation technology used and the field of application in mind. Shapes of microcapsules may vary and include but are not limited to spherical, ellipsoidal and polygonal formations. The form of encapsulation can vary from being evenly spaced throughout the encapsulation matrix, to being confined in one part, for example in case of a core-shell microcapsule particle.

Furthermore, by encapsulating the metal chelate complex in the microcapsule using the encapsulation material it is better protected for possible external influences, such as chemical attacks, that could decrease the activity (such as biocidal activity) of the metal chelate complex.

As will be described below, in the preparation of the sustained release system of the invention it is advantageous to use one or more solubilising agents for increasing the solubility of the one or more metal chelate complexes. A residual amount of solubilising agent for the metal chelate complex will be present in the final product. Hence, the sustained release system of the invention comprises a solubilising agent for the metal chelate complex in an amount of at most 0.5 wt.% based on total weight of the microparticle.

Upon preparation, the sustained release systems of the invention still comprises some remains of the one or more solubilising agents in the microcapsule. The amount of the remaining solubilising agent in the final sustained release system is at most 0.5 wt.% based on total weight of the microcapsule, more preferably at most 0.1 wt.%.

Preferably, the microparticle comprises an aromatic amine, preferably at most 0.5 wt.% based on total weight of the microparticle, more preferably at most 0.1 wt.%. Aromatic amines are preferred solubilising agents. The presence of these amounts allows for a high metal chelate complex loading and good sustained release characteristics. The aromatic amine comprises an aromatic ring, preferably a benzene ring, more preferably an aminoalkylphenyl group, more preferably an aminomethylphenyl group. Suitable aromatic rings for the aromatic amine include furan, pyrrole, pyridine. Suitably, the aromatic amine is a benzyl amine, preferably 1-phenylmethanamine or phenethylamine, more preferably 1-phenylmethanamine. These preferred aromatic amines also apply for the solubilising agents comprising an aromatic amine and for ionic organic modifier compounds comprising an amine group and an aromatic ring. The aromatic amines can be hydrophobic or hydrophilic.

In an embodiment, the intercalation material comprises an inorganic layered material, wherein the inorganic layered material is modified with one or more ionic organic modifier compounds. More preferably, the encapsulation material consists of the inorganic layered material modified with one or more ionic organic modifier compounds. The inorganic layered material can be a negatively charged material, or a positively charged material. Suitable negatively charged inorganic layered materials include layered clays, such as smectite, montmorillonite, kaolinite, vermiculite, bentonite, saponite, and hectorite. Suitable positively charged inorganic layered materials include layered double hydroxides, such as hydrotalcites. Preferably, the inorganic layered material to be used in the invention comprises layered clay and/or layered double hydroxide.

In case the inorganic material is charged, it can suitably comprise counter ions. The nature of the counter ions can vary and is not critical to the invention. For negatively charged inorganic materials these counter ions can for instance comprise one or more selected from the group consisting of Na⁺, K⁺, Mg²⁺, and Ca²⁺. For positively charged inorganic materials these counter ions can for instance comprise one or more selected from the group consisting of CO₃²⁻, Cl-, NO₃-, and SO₄²⁻.

In order to improve the affinity of charged inorganic layered materials for the metal chelate complexes, they can be modified. It is, for example, possible to substitute counter ions that are present between the layers of positively charged or negatively charged inorganic layered material with ionic organic modifier compounds and thereby change the hydrophobicity of the layered material and improve the affinity of the inorganic layered materials for the metal chelate complexes. This principle is well-known for layered clay materials. Layered clay that is modified with such ionic organic modifier compounds is commonly referred to as organoclay.

By carefully selecting the type and amount of the ionic organic modifier compounds used and matching this to the specific metal chelate complex that is used, it is possible to delicately control the affinity of the metal chelate complex for the modified inorganic layered material and to have control over the release rate of the metal chelate complex from the inorganic layered material. It is therefore preferred that the one or more ionic organic modifier compounds have a chemical and/or physical interaction with the metal chelate complex, such as an ionic interaction and/or a hydrogen bond interaction.

Typically, modification of the inorganic layered material involves swelling of the inorganic layered material in a solvent, thereby increasing the interlayer distance, which is defined as the shortest distance between individual layers. Next, the one or more ionic organic modifier compounds are intercalated between the layers by means of ion exchange against the available solvated counter ions present in the inorganic layered material. The ionic organic modifier compound can already be contained in the solvent used for increasing the interlayer distance of the inorganic layered material. Finally, the interlayer distance is again reduced by removal of solvent.

In a special embodiment, the ionic organic modifier compound is intercalated into the interlayer environment of the inorganic layered material together with the metal chelate complex. An advantage of this embodiment is that less intercalation steps are required in preparing the sustained release system of the invention. However, in accordance with this embodiment both the ionic organic modifier compound and the metal chelate complex should be sufficiently soluble in the solvent used for increasing the interlayer distance. Alternatively, the metal chelate complex can be solubilised at a molecular level, such as in micelles.

Suitable solvents for introducing the one or more ionic organic modifier compounds include water and mixtures of water with water-soluble solvents including THF (tetrahydrofuran), ethanol, acetone and acrylonitrile.

In a special embodiment of the invention, the inorganic material is intercalated and thereby modified with a mixture of at least two different ionic organic modifier compounds. This allows an even better control over the affinity of the metal chelate complex for the modified inorganic material and over the release rate of the metal chelate complex from the inorganic material, since the hydrophilicity of the layers can be adjusted in a very delicate way by choice of type and ratio of the two different organic modifier compounds.

The efficacy of modification can be tested by thermo gravimetric analysis (TGA). In a preferred embodiment, at least 25 %, preferably at least 50 %, more preferably at least 90 %, such as 100 % of the exchange capacity of the inorganic material is occupied by the one or more ionic organic modifier compounds.

The interlayer distance of the modified inorganic material depends on the size of the one or more ionic organic modifier compounds. The interlayer distance can typically be increased with respect to the initial, non-modified inorganic material with 20 %, preferably with 50 %. Increasing the interlayer distance of the initial, non-modified inorganic material with more than 500 % can destabilise the inorganic material. Accordingly, the interlayer distance of the modified inorganic material is preferably 20-500 %, more preferably 20-300 % with respect to the interlayer distance of the initial, non-modified inorganic material.

Any charged organic compound can suitably be used as ionic organic modifier compound. In particular, this encompasses positively charged compounds (such as ammonium, phosphonium compounds, sulphonium compounds, and mixtures thereof), and negatively charged compounds (such as the conjugate bases of carboxylic acids, phosphonic acids and sulphonic acids), and mixtures thereof. Also salts of these compounds may be used. Some hydrophobic ionic organic modifier compounds that can suitably be used in accordance with the invention include dihydrogenated tallow dimethyl ammonium chloride, ditallow dimethyl ammonium chloride, hydrogenated tallow trimethyl ammonium chloride, tallow trimethyl ammonium chloride, hexadecyl trimethyl ammonium chloride, coco trimethyl ammonium chloride, oleyl trimethyl ammonium chloride, tallow trimethyl ammonium chloride, tetradecyl trimethyl ammonium bromide, didecyl dimethyl ammonium chloride, dioctyl dimethyl ammonium chloride. Also ammonium compounds derived from the amines can be used, such as dodecyl amine, octadecyl amine, coca amine, oleyl amine, hydrogenated tallow amine, tallow amine, dihydroginated tallow amine, hexadecyl dimethyl amine, coco dimethyl amine, oleyl dimethyl amine, didecyl methyl amine, dicoco methyl amine, and dihydrogynated tallow methyl amine. Some hydrophilic ionic organic modifier compounds that can suitably be used in accordance with the invention include dipolyoxyethylene tallow methyl ammonium chloride, and ammonium compounds derived from the polyoxyalkyleneamines, such as polyoxyalkylenemonoamines, polyoxyalkylenediamines, and polyalkylenetriamines. Suitable examples include the following polyoxyalkyleneamines under the trade name Jeffamine^{®} (commercially available from Huntsman Corporation, USA) M1000, M2005, M2070, D230, D400, D2000, D4000, ED600, ED900, ED2003, EDR148, EDR176, T403, T3000 and T5000.

Positively charged organic compounds can be used in combination with negatively charged inorganic materials, while negatively charged organic compounds can be used in combination with positively charged inorganic materials.

The one or more ionic organic modifier compounds which are introduced in the inorganic material increase the affinity of the inorganic material for the one or more metal chelate complexes.

Preferably, the one or more ionic organic modifier compounds comprise an amine group and an aromatic ring, preferably a benzene ring, preferably an aminoalkylphenyl group, more preferably an aminomethylphenyl group. Suitable aromatic rings include furan, pyrrole and pyridine.

This allows for improved intercalation and better release characteristics. Without wishing to be bound by way of theory, it is believed that the aromatic ring causes an interaction of the ionic organic modifier compound with the chelating ligands of the metal chelate complex, in particular for aromatic ligands, especially pyrithione.

In another embodiment, the invention relates to a sustained release system comprising a microparticle, said microparticle comprising an encapsulation material and an amount of one or more metal chelate complexes encapsulated by said encapsulation material of 10 wt.% or more, based on the total weight of matrix material and metal chelate complex together, wherein said one or more metal chelate complexes have one or more free coordination sites, further comprising a solubilising agent for said metal chelate complex in an amount of at most 0.5 wt.% base on total weight of the microparticle, preferably the encapsulation material comprises a charged cross-linked carbohydrate or protein polymer and release of the active component is triggered by contact of the microparticle with an external stimulus. "Matrix material" is in the context of this embodiment interchangeable with "encapsulation material".

Preferably, the encapsulation material comprises or is a charged cross-linked carbohydrate or protein polymer and release of the active component is triggered by contact of the microcapsule with an external stimulus. Such microcapsules have been previously described, for instance, in WO-A-2004/105485.

In this embodiment, the carbohydrate polymer can be modified by oxidation, substitution with cationic functional groups or with carboxymethyl groups, or esterification e.g. by acetyl groups. The carbohydrate or protein polymer may be chosen from the group consisting of starch or a derivative of starch, cellulose or a derivative of cellulose, pectin or a derivative of pectin, and gelatine or a derivative of gelatine. Further, the cross-linker can be chosen from the group consisting of divinyl sulphone, epichlorohydrin, a di-epoxide such as glycerol diglycidyl ether or butanedioldiglycidyl ether, sodium trimetaphosphate and adipic acid or derivatives thereof. The polymer may also be cross-linked by means of a cross-linking enzyme chosen from the group consisting of peroxidises, laccases, polyphenol oxidases, lysyl oxidases, and lipoxygenases. The external stimulus triggering the release of the compound can be an enzyme which is able to degrade the polymer, a change of electrostatic interaction, a change in the pH, and/or a change in the salt concentration.

The sustained release system of the invention comprises one or more metal chelate complexes that have one or more free coordination sites. The term "coordination site" as used in this application is meant to refer to a point on a metal ion that can accept an electron pair donated, for example, by a liquid or chelating agent. The term "free coordination site" as used in the application is meant to refer to a coordination site on a metal ion that is vacant or occupied by a species that is weakly donating. Such species is readily displaced by another species, such as a Lewis base.

In a metal chelate complex, a metal atom is complexed with one or more chelators. The term "chelator" as used in this application is meant to refer to an organic chemical that can form two or more coordination bonds with a metal ion. The metal chelate complex formed by complexing the metal ion with the chelator comprises heterocyclic rings with the metal atom as part of the ring.

In an embodiment, the one or more metal chelate complexes comprise a metal pyrithione complex, in which a metal ion is complexed with one or more pyrithione chelators. Pyrithione in the context of this application is meant to refer to pyridine-2-thiol-1-oxide. These complexes are known to have particular biocidal effectivity. Exemplary metal pyrithione complexes include zinc pyrithione, iron pyrithione, aluminium pyrithione, magnesium pyrithione, calcium pyrithione, and copper pyrithione. Preferably, the metal chelate complexes comprise zinc pyrithione and/or copper pyrithione. Pyrithiones in general are known to be excellent biocides.

In accordance with the invention, the amount of the one or more metal chelate complexes encapsulated by the encapsulation material, such as intercalated in the intercalation material, can be 12-60 wt.% based on the total weight of encapsulation material, such as intercalation material, and metal chelate complex together, such as 15-60 wt.% or 20-60 wt.%, preferably 35-50 wt.%.

The sustained release system comprises a microparticle. Said microparticle can comprise an intercalation material and an amount of one or more metal chelate complexes. The one or more metal chelate complexes can be intercalated in said intercalation material. The amount of the one or more metal chelate complexes is more than 10 wt.%, based on the total weight of the intercalation material and the one or more metal chelate complexes together, preferably 12-60 wt.%, more preferably 15-60 wt.%, more preferably 20-60 wt.%, even more preferably 35-50 wt.%, most preferably 40-60 wt.%.

Such high loadings of metal chelate complexes having one or more free coordination sites in an encapsulation material was heretofore not possible unless enormous amounts of solvent had to be used.

A sustained release system with such high loadings of metal chelate complexes having one or more free coordination sites was heretofore not obtainable; at least not in an economically viable way.

Achieving such high loadings of the metal chelate complexes in a sustained release system opens a whole new spectrum of applications for the metal chelate complexes, such as in construction.

Preferably, the one or more metal chelate complexes comprise a biocide, such as a fungicide, algicide and/or a bactericide.

In a preferred embodiment of the invention, the matrix material comprises an organoclay material and the one or more metal chelate complexes are intercalated in the organoclay. This means that the one or more metal chelate complexes are present between the stacks of organic modified clay platelets. In this embodiment, the release is sustained by increased diffusion pathways and the hydrophobic interactions of the metal chelate complex and the organic modifier compound present on the clay platelets surface.

The preferred feature that the matrix material comprises an organoclay material and the one or more metal chelate complexes are intercalated in the organoclay indicates that the sustained release system comprises a microparticle, wherein said microparticle is formed of a sustained release composition (matrix material), wherein said sustained release composition, and therefore said microparticle, comprise an organoclay material, wherein the one or more metal chelate complexes are intercalated in the organoclay material. The organoclay material is a kind of inorganic layered material modified with an ionic organic modifier compound.

In order to achieve a high loading of the metal chelate complex with one or more free coordination sites in the encapsulation material, it is required that the solubility of the metal chelate complex (which is typically low) is increased. The inventors surprisingly found that this can be achieved by mixing the metal chelate complex with a suitable solvent and one or more solubilising agents capable of solubilising the chelate complex in the used solvent.

Accordingly, in a further aspect the invention is directed to a method for preparing a sustained release system, comprising a microparticle comprising an intercalation material and an amount of more than 10 wt.% of one or more metal chelate complexes based on the total weight of the intercalation material and the one or more metal chelate complexes together, further comprising a solubilising agent for said metal chelate complex in an amount of at most 0.5 wt.% based on total weight of the microparticle as described herein, comprising
i) solubilising one or more metal chelate complexes in a first solvent using one or more solubilising agents capable of increasing the solubility of the one or more metal chelate complexes in said first solvent;
ii) providing an intercalation material, mixing the intercalation material in a second solvent which is miscible with the first solvent;
iii) mixing the solubilised one or more metal chelate complexes with the mixture of said intercalation material in said second solvent, thereby intercalating said one or more metal chelate complexes in said intercalation material;
iv) evaporating first and second solvent; and
v) evaporating solubilising agent.

In an embodiment said intercalation material is or comprises an inorganic layered material, modified with one or more ionic organic modifier compounds, and the mixing of the inorganic layered material in the second solvent in step (ii) leads to swelling of the inorganic layered material, and the mixing of the solubilised one or more metal chelate complexes with the mixture of the intercalation material in the second solvent in step (iii) leads to intercalation of the inorganic layered material with the one or more metal chelate complexes. It is described before in this application that the mixing of the inorganic layered material in the second solvent in step (ii) in such case comprises swelling of the inorganic layered material, and the mixing of the solubilised one or more metal chelate complexes with the mixture of the intercalation material in the second solvent in step (iii) in such case comprises intercalation of the inorganic layered material with the one or more metal chelate complexes.

If the intercalation material is, or comprises an inorganic layered material that is modified with an ionic organic modifier compound, this compound can in an embodiment simultaneously act as a solubilising agent. In that case, a method for preparing a sustained release system as described herein, comprising a microparticle comprising an intercalation material and an amount of more than 10 wt.% of one or more metal chelate complexes based on the total weight of the intercalation material and the one or more metal chelate complexes together, further comprising a solubilising agent for said metal chelate complex in an amount of at most 0.5 wt.% based on total weight of the microparticle, comprises
i) solubilising the one or more metal chelate complexes in a first solvent using one or more solubilising agents capable of increasing the solubility of the one or more metal chelate complexes in said first solvent, wherein said one or more solubilising agents comprise one or more ionic organic modifier compounds for modifying a inorganic layered material;
ii) providing a inorganic layered material, and swelling the inorganic layered material in a second solvent which is miscible with the first solvent;
iii) mixing the solubilised one or more metal chelate complexes with the swelled inorganic layered material, thereby modifying the inorganic material with one or more ionic organic modifier compounds and intercalating the inorganic layered material with one or more metal chelate complexes;
iv) evaporating first and second solvent; and
v) optionally evaporation solubilising agent.

Importantly, in this process the one or more metal chelate complexes are solubilised in the first solvent using one or more solubilising agents. The one or more solubilising agents are capable of increasing the solubility of the one or more metal chelate complexes in a solvent.

In an embodiment, the one or more solubilising agents comprise one or more amines. These amines can be hydrophobic or hydrophilic in nature. In an embodiment, the one or more solubilising agents comprise one or more hydrophobic amines. The term "hydrophobic amine" as used in this application is meant to refer to a compound containing at least one hydrophobic group and at least one amine group. As used herein the term "hydrophobic" refers to an amine that has a solubility in water of no more than 200 micrograms per milliliter. Representative hydrophobic amines include benzylamines, alkyl amines and allyl amines. Examples thereof include cyclohexylamine, hexylamine, methylhexylamine, phenethylamine, octylamine, oleylamine, decylamine, dodecylamine, octadecylamine, and the like.

As mentioned before, aromatic amines are preferred solubilising agents. Preferably, the amine is aromatic. The aromatic amine can be hydrophobic or hydrophilic. An aromatic amine comprises an aromatic ring, preferably the amine comprises a benzene ring, more preferably an aminoalkylphenyl group, more preferably an aminomethylphenyl group. Preferably, the amine is a benzylamine. Suitable amines include 1-phenylmethanamine and phenylethan-2-amine. Such amines allows for improved intercalation and better release characteristics.

In a further embodiment the one or more solubilising agents comprise 2,4-pentanedione and/or adducts thereof. An advantage of these type of solubilising agents is that they can be used in a broad pH range (*viz.* including in acidic environments).

Upon preparation, the sustained release systems of the invention still comprise some remains of the one or more solubilising agents in the microcapsule. Accordingly, the invention provides a sustained release system as described herein, wherein the microcapsule, comprising microparticle, further comprises a solubilising agent. The amount of the remaining solubilising agent in the final sustained release system is at most 0.5 wt.% based on total weight of the microcapsule, comprising microparticle, more preferably at most 0.1 wt.%.

In a special embodiment of the invention the one or more solubilising agents comprise one or more ionic organic modifier compounds, so that the one or more solubilising agents can at the same time act as modifier compound for the inorganic layered material. To this effect, the one or more solubilising agents can, for instance, include an ammonium, phosphonium, or sulphonium group. Hence, in accordance with this embodiment at least part of the one or more ionic organic modified molecules are identical to or the same as the one or more solubilising agents. Examples of suitable compounds for this purpose include ammonium amines, phosphonium amines and sulphonium amines.

Without wishing to be bound by theory, the inventors believe that suitable solubilising agents, such as hydrophobic amines, are capable of occupying one or more of the free coordination sites of the metal chelate complex, thereby increasing the overall solubility of the metal chelate complex. Hence, in a preferred embodiment the molar amount of solubilising agent used per molar amount of metal chelate complex more or less corresponds to the available free coordination sites. For example, if the metal chelate complex has two free coordination sites, then the applied stoichiometric ratio between the metal chelate complex and the solubilising agent is preferably about 1:2 and can be for instance be 1:0.5 or more, such as 1:1 or more, or 1:2 or more. Alternatively, if the metal chelate complex has one free coordination site, then the applied stoichiometric ratio between the metal chelate complex and the solubilising agent is preferably about 1:1, and can for instance be 1:0.2 or more, such as 1:0.5 or more, or 1:1 or more. The upper limit is not critical, because adding more solubilising agent does not lead to a decrease in solubility. From a practical point of view, however, it may not be cost efficient to use an amount of solubilising agent exceeding the available amount of free coordination sites by 4 times or more.

In step ii) of the process of the invention, the intercalation material is mixed in a suitable second solvent. In the case of an inorganic layered material this can involve swelling of the material.

In any case the second solvent should be miscible with the first solvent, and preferably the second solvent is the same as the first solvent. Preferably, the first and second solvent are both independently chosen from the group consisting of tetrahydrofuran, toluene, acrylonitrile, ethylacetate, ethanol, isopropanol, and mixtures of water with water soluble solvents.

In the special embodiment described above according to which the one or more solubilising agents comprise one or more ionic organic modifier compounds, then in step ii) it is not required to provide a modified inorganic layered material. The inorganic layered material can then be modified upon mixing in step iii).

After having mixed the one or more pre-treated metal chelate complexes with the intercalation material, the process comprises evaporating first and second solvent. Such evaporation may be achieved, for instance, by rotational evaporation or the like. During evaporation of first and second solvent, the layers of the inorganic layered material again form stacks with the one or more metal chelate complexes included between the layers.

Upon further evaporation, solubilising agent may be removed to obtain the sustained release system of the invention. Surprisingly, the inventors found that (where the solubilising agent does not simultaneously act as ionic organic modifier compound for an inorganic layered material) in the absence of evaporating solubilising agent, the one or more metal chelate complexes are relatively quickly released without the desired control. This further evaporation step v) typically involves a lower pressure and/or a higher temperature than the evaporation step iv). Evaporation of solubilising agent depends slightly on the solubilising agent used, but typically involves reducing the pressure to 0.1 mbar or less, preferably 0.01 bar or less, such as in the range of 10-0.01 mbar. In addition, the temperature may be increased to 40 °C or more, preferably 50 °C or more, such as in the range of 40-150 °C. If the solubilising agent simultaneously acts as an ionic organic modifier compound for an inorganic layered material, then this optional evaporation step can be omitted. Optionally excess solubilising agent may, however, still be removed by evaporation techniques.

After evaporation, a solid material is obtained that can be milled to a particle size desirable for the intended application. The milled material may optionally be sieved in order to obtain a better defined particle size distribution. The solid material, optionally milled, can be used, for example in a material for construction as described below.

In yet a further aspect the invention is directed to a material for construction comprising a sustained release system according to the invention, or a sustained release system obtainable by the method of the invention.

A sustained release system according to the invention, or a sustained release system obtainable by the method of the invention, comprised in a material for construction, is referred to as metal chelate complex loaded matrix material.

The material for construction can be any kind of material suitable for construction purposes, both organic and inorganic materials. Some examples include cement, plaster, jointing compound, plasterboard, paint, glue, plastics, wallpaper, wood, textiles, straw, thatch, plywood, Oriented Strand Board, particle board, or Medium-Density Fibreboard. In an embodiment, the material for construction is a construction material and the one or more metal chelate complexes comprise a biocide.

The amount of the one or more metal chelate complexes acting as biocide in the material for construction according to the invention can be low in comparison to the amount of biocides conventionally used in construction materials. Typically, the amount of metal chelate complex loaded matrix material used in the material for construction of the invention is in the range of 0.01-20 wt.%, based on the total weight of the material for construction.

This corresponds to an amount of 1-60 000 ppm. For instance, the amount of metal chelate complex loaded matrix material in the material for construction can be 0.02-20 wt.% such as 0.1-20 wt.% or 50-60 000 ppm. Preferably, the amount of metal chelate complex loaded matrix material used in the material for construction is in the range of 0.01-10 wt.%, based on the total weight of the material for construction. This corresponds to an amount of 1-30 000 ppm of metal chelate complex in the material for construction, based on the total weight of the material for construction. For instance, the preferred amount of metal chelate complex loaded matrix material in the material for construction is 0.1-10 wt.%, such as 1-10 wt.% or 50-30 000 ppm. Preferably, the metal chelate complex loaded matrix material comprises an inorganic layered material, wherein the inorganic layered material is modified with one or more ionic organic modifier compounds.

An advantage of the present invention is that metal chelate complex release is increased in moist environments. Such moist or damp environments are often the cause of microbial fouling and therefore an increase in the amount of released metal chelate complex acting as biocide is effective in reducing or preventing the microbial fouling.

Metal chelate complex not yet released is stabilised by the protective environment of the matrix material, in particular when applying an inorganic layered material, against premature degradation due to potentially harmful external influences such as high alkalinity (often present in materials for construction), chemical attacks and/or ultraviolet radiation.

### Examples

### Example 1 (comparative)

The conventional manner of producing intercalated zinc pyrithion in an organoclay, with a loading of 10 wt.% of said zinc pyrithion, can be described as follows:
With mechanical stirring 45 g of organoclay (Cloisite 20) was dispersed in 1 litre of boiling tetrahydrofuran (boiling point THF: 66 °C) in order to achieve exfoliation of the clay platelets. Separately, a zinc pyrithion solution of 5 g zinc pyrithion in 1 litre of boiling tetrahydrofuran was prepared. The latter solution was added hot to the stirred organoclay dispersion. The mixture was kept overnight at boiling temperature under reflux. Subsequently, the mixture was cooled to 20 °C. The tetrahydrofuran was removed by rotational evaporation (40 °C and 100 mbar). The remaining solid mass was milled down to a powder and fractionated using sieves with specific maze sizes.

The amount of organic solvent necessary to produce a composition of zinc pyrithion intercalated in organoclay containing 1 kg of zinc pyrithion amounted to 400 litres of THF. This ratio of active and solvent will make it very difficult to upscale the process for commercial applications. Furthermore, the intercalation process had to be performed at 65 °C to dissolve the zinc pyrithion completely at above mentioned concentrations. This also is an obstacle for a cost and environmental feasible production of the material.

### Example 2 (inventive)

To minimise the amount of solvent and limit the amount of required thermal energy, a new inventive process has been found. This process not only requires less solvent and energy but inherently can enhance the amount of active in the end material to much higher loading. For instance, to intercalate 40 wt.% of zinc pyrithion in an organoclay the following adapted procedure was used:
6.7 g of benzyl amine was dissolved in 150 ml of tetrahydrofuran at 20 °C. Subsequently, 5 g of zinc pyrithion was added and the mixture was stirred until complete dissolution was obtained. 6.7 g of organoclay (Cloisite 20A) was added under stirring at 20 °C until the clay was homogenously exfoliated. The tetrahydrofuran was removed by rotational evaporation (40 °C and 100 mbar). Subsequently, the temperature was raised to 75 °C and the pressure reduced to 0.1 mbar to remove the majority of the benzylamine. The remaining solid mass was milled down to a powder and fractionated using sieves with specific maze sizes.

The amount of organic solvent necessary to produce a composition of zinc pyrithion intercalated in organoclay containing 1 kg of zinc pyrithion here only amounted to 30 litres of THF, which makes the process commercially viable. No elevated temperature was needed to perform the intercalation process when benzylamine was used as a solubilising agent.

## Claims

1. Sustained release system comprising a microparticle, said microparticle comprising an intercalation material and an amount of one or more metal chelate complexes intercalated in said intercalation material of more than 10 wt.%, based on the total weight of the intercalation material and the one or more metal chelate complexes together, wherein said one or more metal chelate complexes have one or more free coordination sites, wherein said intercalation material comprises an inorganic layered material, wherein the inorganic layered material is modified with one or more ionic organic modifier compounds, further comprising a solubilising agent for said metal chelate complex in an amount of at most 0.5 wt.% based on total weight of the microparticle.

2. Sustained release system comprising a microparticle, said microparticle comprising an encapsulation material and an amount of one or more metal chelate complexes encapsulated by said encapsulation material of 10 wt.% or more, based on the total weight of matrix material and metal chelate complex together, wherein said one or more metal chelate complexes have one or more free coordination sites, further comprising a solubilising agent for said metal chelate complex in an amount of at most 0.5 wt.% based on total weight of the microparticle, preferably the encapsulation material comprises a charged cross-linked carbohydrate or protein polymer and release of the active component is triggered by contact of the microparticle with an external stimulus.

3. Sustained release system according to claim 1 or 2, wherein the amount of said solubilising agent for said metal chelate complex, based on total weight of the microparticle, is at most 0.1 wt.%.

4. Sustained release system according to any one of claims 1-3, wherein the microparticle comprises an aromatic amine, preferably at most 0.5 wt.% based on total weight of the microparticle, more preferably at most 0.1 wt.%.

5. Sustained release system according to any one of claims 1-4, wherein the amount of the one or more metal chelate complexes encapsulated by said encapsulation material, or intercalated in said intercalation material, is 20-60 wt.% based on the total weight of encapsulation material or intercalation material and metal chelate complex together, such as 30-60 wt.%, preferably 35-50 wt.%.

6. Sustained release system according to any one of claims 1, 3-5, wherein the one or more ionic organic modifier compounds comprise one or more chosen from the group consisting of ammonium compounds, phosphonium compounds, sulphonium compounds, conjugate bases of carboxylic acids, conjugate bases of phosphonic acids, conjugate bases of sulphonic acids, and salts thereof,
preferably the one or more ionic organic modifier compounds comprise an amine group and an aromatic ring.

7. Sustained release system according to any one of claims 1, 3-6, wherein the inorganic material comprises
- a negatively charged clay, such as smectite, montmorillonite, kaolinite, vermiculite, bentonite, saponite, and hectorite; and/or
- a positively charged layered double hydroxide, such as hydrotalcite.

8. Sustained release system according to any one of claims 1-7, wherein the one or more metal chelate complexes comprise a biocide, preferably a fungicide, algicide and/or a bactericide.

9. Sustained release system according to any one of claims 1-8, wherein the one or more metal chelate complexes comprises a metal pyrithione complex, preferably selected from the group consisting of zinc pyrithione, iron pyrithione, aluminium pyrithione, magnesium pyrithione, calcium pyrithione, and copper pyrithione.

10. Method for preparing a sustained release system, comprising a microparticle comprising an intercalation material and an amount of more than 10 wt.% of one or more metal chelate complexes based on the total weight of the intercalation material and the one or more metal chelate complexes together, further comprising a solubilising agent for said metal chelate complex in an amount of at most 0.5 wt.% based on total weight of the microparticle, according to any one of claims 1, 3-9, comprising
i) solubilising the one or more metal chelate complexes in a first solvent using one or more solubilising agents capable of increasing the solubility of the one or more metal chelate complexes in said first solvent;
ii) providing an intercalation material, and mixing the intercalation material in a second solvent which is miscible with the first solvent;
iii) mixing the solubilised one or more metal chelate complexes with the mixture of said intercalation material in said second solvent, thereby intercalating said one or more metal chelate complexes in said intercalation material;
iv) evaporating first and second solvent; and
v) evaporating solubilising agent,
with preferably the following: wherein said intercalation material is or comprises an inorganic layered material, modified with one or more ionic organic modifier compounds, and wherein the mixing of the inorganic layered material in the second solvent in step (ii) leads to swelling of the inorganic layered material, and wherein the mixing of the solubilised one or more metal chelate complexes with the mixture of the intercalation material in the second solvent in step (iii) leads to intercalation of the inorganic layered material with the one or more metal chelate complexes.

11. Method for preparing a sustained release system, comprising a microparticle comprising an intercalation material and an amount of more than 10 wt.% of one or more metal chelate complexes based on the total weight of the intercalation material and the one or more metal chelate complexes together, further comprising a solubilising agent for said metal chelate complex in an amount of at most 0.5 wt.% based on total weight of the microparticle, according to any one of claims 1, 3-9, comprising
i) solubilising the one or more metal chelate complexes in a first solvent using one or more solubilising agents capable of increasing the solubility of the one or more metal chelate complexes in said first solvent, wherein said one or more solubilising agents comprise one or more ionic organic modifier compounds for modifying an inorganic layered material;
ii) providing an inorganic layered material, and swelling the inorganic layered material in a second solvent which is miscible with the first solvent;
iii) mixing the solubilised one or more metal chelate complexes with the swelled inorganic layered material, thereby modifying the inorganic material with one or more ionic organic modifier compounds and intercalating the inorganic layered material with one or more metal chelate complexes;
iv) evaporating first and second solvent; and
v) optionally evaporating solubilising agent.

12. Method according to claim 10 or 11, wherein at least part of the one or more ionic organic modifier molecules is identical to or the same as the one or more solubilising agents.

13. Method according to any one of claims claim 10-12, wherein said one or more solubilising agents comprise an amine, wherein said amine is preferably a hydrophobic amine, more preferably the amine is a hydrophobic amine selected from the group consisting of alkyl amines, benzyl amines, and allyl amines, more preferably the amine is aromatic.

14. Method according to any one of claims 10-13, wherein said first solvent and said second solvent are selected from the group consisting of tetrahydrofuran, toluene, acrylonitrile, ethylacetate, ethanol, isopropanol and mixtures of any of these solvents with water, and wherein preferably the first solvent is the same as the second solvent.

15. Material for construction comprising a sustained release system according to any one of claims 1-9, or a sustained release system obtainable by the method of any one of claims 10-14,
wherein said material preferably comprises 1-60 000 ppm by weight of the one or more metal chelate complexes, based on the total weight of the material for construction, preferably 50-60 000 ppm, more preferably 50-30 000 ppm and/or wherein said material is preferably in the form of cement, plaster, jointing compound, plasterboard, paint, glue, plastics, wallpaper, wood, textiles, straw, thatch, plywood, Oriented Strand Board, particle board, or Medium-Density Fibreboard.

## Patentansprüche

1. System zur verzögerten Freigabe, umfassend einen Mikropartikel, wobei der Mikropartikel ein Einlagerungsmaterial und eine Menge von einem oder mehreren in das Einlagerungsmaterial eingelagerten Metallchelatkomplexen von mehr als 10 Gew.-%, basierend auf dem Gesamtgewicht des Einlagerungsmaterials und dem einen oder den mehreren Metallchelatkomplexen zusammen, wobei der eine oder die mehreren Metallchelatkomplexe eine oder mehrere eine oder mehrere freie Koordinationsstellen haben wobei das Einlagerungsmaterial ein anorganisches Schichtmaterial umfasst, wobei das anorganische Schichtmaterial mit einer oder mehreren ionisch organischen Modifizierungsverbindungen modifiziert ist, ferner umfassend ein löslichkeitsförderndes Mittel für den Metallchelatkomplex in einer Menge von höchstens 0,5 Gew.-%, basierend auf dem Gesamtgewicht des Mikropartikels.

2. System zur verzögerten Freisetzung, umfassend einen Mikropartikel, wobei der Mikropartikel ein Einkapselungsmaterial und eine Menge von einem oder mehreren Metallchelatkomplexen, eingekapselt von dem Einkapselungsmaterial von 10 Gew.-% oder mehr, basierend auf dem Gesamtgewicht von Matrixmaterial und Metallchelatkomplex zusammen, umfasst, wobei der eine oder die mehreren Metallchelatkomplexe eine oder mehrere freie Koordinationsstellen haben, ferner umfassend ein löslichkeitsförderndes Mittel für den Metallchelatkomplex in einer Menge von höchstens 0,5 Gew.-%, basierend auf dem Gesamtgewicht des Mikropartikels, wobei das Einkapselungsmaterial bevorzugt ein geladenes, quervernetztes Kohlenhydrat oder Proteinpolymer umfasst und die Freisetzung der aktiven Komponente durch Kontakt des Mikropartikels mit einem externen Stimulus ausgelöst wird.

3. System zur verzögerten Freisetzung nach Anspruch 1 oder 2, wobei die Menge des löslichkeitsfördernden Mittels für den Metallchelatkomplex, basierend auf dem Gesamtgewicht des Mikropartikels, höchstens 0,1 Gew.-% ist.

4. System zur verzögerten Freisetzung nach einem der Ansprüche 1-3, wobei der Mikropartikel ein aromatisches Amin, bevorzugt höchstens 0,5 Gew.-%, basierend auf dem Gesamtgewicht des Mikropartikels, bevorzugter höchstens 0,1 Gew.-%, umfasst.

5. System zur verzögerten Freisetzung nach einem der Ansprüche 1-4, wobei die Menge von dem einen oder den mehreren Metallchelatkomplexen, eingekapselt von dem Einkapselungsmaterial, oder eingelagert in das Einlagerungsmaterial, 20-60 Gew.-%, basierend auf dem Gesamtgewicht von Einkapselungsmaterial oder Einlagerungsmaterial und Metallchelatkomplex zusammen, ist, wie beispielsweise 30-60 Gew.-%, bevorzugt 35-50 Gew.-%.

6. System zur verzögerten Freisetzung nach einem der Ansprüche 1, 3-5, wobei eine oder mehrere ionische organische Modifizierungsverbindungen eines oder mehrere, ausgewählt aus der Gruppe, bestehend aus Ammoniumverbindungen, Phosphoniumverbindungen, Sulphoniumverbindungen, Konjugatbasen von Carboxylsäuren, Konjugatbasen von Phosphonsäuren, Konjugatbasen von Sulphonsäuren und Salzen davon, umfassen, bevorzugt wobei die eine oder mehreren ionischen organischen Modifizierungsverbindungen eine Amingruppe und einen aromatischen Ring umfassen.

7. System zur verzögerten Freisetzung nach einem der Ansprüche 1, 3-6, wobei das anorganische Material
- einen negativ geladenen Ton wie Smektit, Montmorillonit, Kaolinit, Vermiculit, Bentonit, Saponit und Hectorit; und/oder
ein positiv geladenes geschichtetes Doppelhydroxid wie beispielsweise Hydrotalcit
umfasst.

8. System zur verzögerten Freisetzung nach einem der Ansprüche 1-7, wobei der eine oder die mehreren Metallchelatkomplexe ein Biozid, bevorzugt ein Fungizid, Algizid und/oder ein Bakterizid umfassen.

9. System zur verzögerten Freisetzung nach einem der Ansprüche 1-8, wobei der eine oder die mehreren Metallchelatkomplexe einen Metallpyrithionkomplex umfassen, bevorzugt ausgewählt aus der Gruppe, bestehend aus Zinkpyrithion, Eisenpyrithion, Aluminiumpyrithion, Magnesiumpyrithion, Kalziumpyrithion und Kupferpyrithion.

10. Verfahren zur Herstellung eines Systems zur verzögerten Freisetzung, umfassend einen Mikropartikel, umfassend ein Einlagerungsmaterial und eine Menge von mehr als 10 Gew.-% von einem oder mehreren Metallchelatkomplexen, basierend auf dem Gesamtgewicht des Einlagerungsmaterials und dem einen oder den mehreren Metallchelatkomplexen zusammen, ferner umfassend ein löslichkeitsförderndes Mittel für den Metallchelatkomplex in einer Menge von höchstens 0,5 Gew.-%, basierend auf dem Gesamtgewicht des Mikropartikels, nach einem der Ansprüche 1, 3-9, umfassend:
i) das Lösen des einen oder der mehreren Metallchelatkomplexe in einem ersten Lösungsmittel unter Verwendung von einem oder mehreren löslichkeitsfördernden Mitteln, geeignet zum Erhöhen der Löslichkeit des einen oder der mehreren Metallchelatkomplexe in dem ersten Lösungsmittel;
ii) das Bereitstellen eines Einlagerungsmaterials und Mischen des Einlagerungsmaterials in einem zweiten Lösungsmittel, das mit dem ersten Lösungsmittel mischbar ist;
iii) das Mischen des einen oder der mehreren gelösten Metallchelatkomplexe mit dem Gemisch des Einlagerungsmaterials in dem zweiten Lösungsmittel, wobei der eine oder die mehreren Metallchelatkomplexe in das Einlagerungsmaterial eingelagert werden;
iv) das Verdampfen des ersten und zweiten Lösungsmittels; und
v) das Verdampfen des löslichkeitsfördernden Mittels,
mit vorzugsweise Folgendem: wobei das Einlagerungsmaterial ein anorganisches Schichtmaterial ist oder umfasst, modifiziert mit einer oder mehreren ionischen organischen Modifizierungsverbindungen, und wobei das Mischen des anorganischen Schichtmaterials in dem zweiten Lösungsmittel in Schritt (ii) zu einem Anschwellen des anorganischen Schichtmaterials führt, und wobei das Mischen des einen oder der mehreren gelösten Metallchelatkomplexe mit dem Gemisch des Einlagerungsmaterials in dem zweiten Lösungsmittel in Schritt (iii) zum Einlagern des anorganischen Schichtmaterials mit dem einen oder den mehreren Metallchelatkomplexen führt.

11. Verfahren zur Herstellung eines Systems zur verzögerten Freisetzung, umfassend einen Mikropartikel, umfassend ein Einlagerungsmaterial und eine Menge von mehr als 10 Gew.-% von einem oder mehreren Metallchelatkomplexen, basierend auf dem Gesamtgewicht des Einlagerungsmaterials und dem einen oder den mehreren Metallchelatkomplexen zusammen, ferner umfassend ein löslichkeitsförderndes Mittel für den Metallchelatkomplex in einer Menge von höchstens 0,5 Gew.-%, basierend auf dem Gesamtgewicht des Mikropartikels, nach einem der Ansprüche 1, 3-9, umfassend:
i) das Lösen des einen oder der mehreren Metallchelatkomplexe in einem ersten Lösungsmittel unter Verwendung von einem oder mehreren löslichkeitsfördernden Mitteln, geeignet zum Erhöhen der Löslichkeit des einen oder der mehreren Metallchelatkomplexe in dem ersten Lösungsmittel, wobei das eine oder die mehreren löslichkeitsfördernden Mittel einen oder mehrere ionische organische Modifizierungsverbindungen zum Modifizieren eines anorganischen Schichtmaterials umfassen;
ii) das Bereitstellen eines anorganischen Schichtmaterials und Quellen des anorganischen Schichtmaterials in einem zweiten Lösungsmittel, das mit dem ersten Lösungsmittel mischbar ist;
iii) das Mischen des einen oder der mehreren gelösten Metallchelatkomplexe mit dem gequollenen anorganischen Schichtmaterial, dabei Modifizieren des anorganischen Materials mit einem oder mehreren ionischen organischen Modifizierungsverbindungen und Einlagern des anorganischen Schichtmaterials mit einem oder mehreren Metallchelatkomplexen;
iv) das Verdampfen des ersten und zweiten Lösungsmittels; und
v) optional das Verdampfen des löslichkeitsfördernden Mittels.

12. Verfahren nach Anspruch 10 oder 11, wobei mindestens ein Teil des einen oder der mehreren ionischen organischen Modifizierungsmoleküle identisch mit oder dasselbe ist wie das eine oder die mehreren löslichkeitsfördernden Mittel.

13. Verfahren nach einem der Ansprüche 10-12, wobei das eine oder die mehreren löslichkeitsfördernden Mittel ein Amin umfassen, wobei das Amin bevorzugt ein hydrophobes Amin ist, bevorzugter das Amin ein hydrophobes Amin ist, ausgewählt aus der Gruppe bestehend aus Alkylaminen, Benzylaminen und Allylaminen, noch bevorzugter das Amin aromatisch ist.

14. Verfahren nach einem der Ansprüche 10-13, sobei das erste Lösungsmittel und das zweite Lösungsmittel ausgewählt sind aus der Gruppe bestehend aus Tetrahydrofuran, Toluen, Acrylonitril, Ethylacetat, Ethanol, Isopropanol und Gemischen von beliebigen dieser Lösungsmittel mit Wasser und wobei bevorzugt das erste Lösungsmittel dasselbe ist wie das zweite Lösungsmittel.

15. Baumaterial, umfassend ein System zur verzögerten Freisetzung nach einem der Ansprüche 1-9 oder ein System zur verzögerten Freisetzung, erhältlich durch das Verfahren nach einem der Ansprüche 10-14,
wobei das Material bevorzugt 1-60 000 ppm nach Gewicht des einen oder der mehreren Metallchelatkomplexe, basierend auf dem Gesamtgewicht des Baumaterials, bevorzugt 50-60 000 ppm, bevorzugter 50-30 000 ppm umfasst und/oder wobei das Material bevorzugt in der Form von Zement, Gips, einer Dichtungsverbindung, Gipsplatte, Farbe, Kunststoff, Tapete, Holz, Textilien, Stroh, Dachstroh, Sperrholz, Grobspanplatte (OSB, Oriented Strand Board), Pressspan oder mitteldichte Faserplatte (MDF, Medium-Density Fibreboard) ist.

## Revendications

1. Système à libération soutenue comprenant une microparticule, ladite micro particule comprenant un matériau d'intercalation et une quantité de plus de 10 % en poids d'un ou plusieurs complexes de type chélate métallique intercalés dans ledit matériau d'intercalation, sur la base du poids total du matériau d'intercalation et des un ou plusieurs complexes de type chélate métallique réunis, dans lequel lesdits un ou plusieurs complexes de type chélate métallique ont un ou plusieurs sites de coordination libres, dans lequel ledit matériau d'intercalation comprend un matériau inorganique en couches, dans lequel le matériau inorganique en couches est modifié avec un ou plusieurs composés de modificateur organique ionique, comprenant de plus un agent de solubilisation dudit complexe de type chélate métallique dans une quantité d'au maximum 0,5 % en poids sur la base du poids total de la microparticule.

2. Système à libération soutenue comprenant une microparticule, ladite microparticule comprenant un matériau d'encapsulation et une quantité de 10 % en poids ou plus d'un ou plusieurs complexes de type chélate métallique encapsulés par ledit matériau d'encapsulation, sur la base du poids total du matériau de matrice et du complexe de type chélate métallique réunis, dans lequel lesdits un ou plusieurs complexes de type chélate métallique ont un ou plusieurs sites de coordination libres, comprenant de plus un agent de solubilisation dudit complexe de type chélate métallique dans une quantité d'au maximum 0,5 % en poids sur la base du poids total de la microparticule, de préférence le matériau d'encapsulation comprend un carbohydrate réticulé chargé ou un polymère de protéine et une libération du composant actif est déclenchée par contact de la microparticule avec un stimulus externe.

3. Système à libération soutenue selon la revendication 1 ou 2, dans lequel la quantité dudit agent de solubilisation dudit complexe de type chélate métallique, sur la base du poids total de la microparticule, est au maximum de 0,1 % en poids.

4. Système à libération soutenue selon l'une quelconque des revendications 1 à 3, dans lequel la microparticule comprend une amine aromatique, de préférence au maximum 0,5 % en poids sur la base du poids total de la microparticule, de manière plus préférée au maximum 0,1 % en poids.

5. Système à libération soutenue selon l'une quelconque des revendications 1 à 4, dans lequel la quantité des un ou plusieurs complexes de type chélate métallique encapsulés par ledit matériau d'encapsulation, ou intercalés dans ledit matériau d'intercalation, est de 20 à 60 % en poids sur la base du poids total de matériau d'encapsulation ou d'intercalation et du complexe de type chélate métallique réunis, tels que de 30 à 60 % en poids, de préférence de 35 à 50 % en poids.

6. Système à libération soutenue selon l'une quelconque des revendications 1, 3 à 5, dans lequel les un ou plusieurs composés de modificateur organique ionique comprennent un ou plusieurs composés choisis parmi le groupe constitué de composés d'ammonium, composés de phosphonium, composés de sulfonium, de bases conjuguées d'acides carboxyliques, de bases conjuguées d'acides phosphoriques, de bases conjuguées d'acides sulfoniques, et de sels de ceux-ci,
de préférence les un ou plusieurs composés de modificateur organique ionique comprennent un groupe amine et un cycle aromatique.

7. Système à libération soutenue selon l'une quelconque des revendications 1, 3 à 6, dans lequel le matériau inorganique comprend :
- une argile chargée négativement, telle que smectite, montmorillonite, kaolinite, vermiculite, bentonite, saponite, et hectorite ; et/ou
- un hydroxyde double en couches chargé positivement, tel que hydrotalcite.

8. Système à libération soutenue selon l'une quelconque des revendications 1 à 7, dans lequel les un ou plusieurs complexes de type chélate métallique comprennent un biocide, de préférence un fongicide, un algicide et/ou un bactéricide.

9. Système à libération soutenue selon l'une quelconque des revendications 1 à 8, dans lequel les un ou plusieurs complexes de type chélate métallique comprennent un complexe de pyrithione métallique, de préférence sélectionné parmi le groupe constitué de pyrithione de zinc, pyrithione de fer, pyrithione d'aluminium, pyrithione de magnésium, pyrithione de calcium et pyrithione de cuivre.

10. Méthode de préparation d'un système à libération soutenue, comprenant une microparticule comprenant un matériau d'intercalation et une quantité de plus de 10 % en poids d'un ou plusieurs complexes de type chélate métallique, sur la base du poids total du matériau d'intercalation et des un ou plusieurs complexes de type chélate métallique réunis, comprenant de plus un agent de solubilisation dudit complexe de type chélate métallique dans une quantité d'au maximum 0,5 % en poids sur la base du poids total de la microparticule, selon l'une quelconque des revendications 1, 3 à 9, consistant à :
i) solubiliser les un ou plusieurs complexes de type chélate métallique dans un premier solvant en utilisant un ou plusieurs agents de solubilisation pouvant augmenter la solubilité des un ou plusieurs complexes de type chélate métallique dans ledit premier solvant ;
ii) fournir un matériau d'intercalation, et mélanger le matériau d'intercalation dans un second solvant qui est miscible avec le premier solvant ;
iii) mélanger les un ou plusieurs complexes de type chélate métallique solubilisés avec le mélange dudit matériau d'intercalation dans le second solvant, en intercalant ainsi lesdits un ou plusieurs complexes de type chélate métallique dans ledit matériau d'intercalation ;
iv) évaporer le premier et le second solvant ; et
v) évaporer l'agent de solubilisation,
avec de préférence ce qui suit : le matériau d'intercalation ou comprend un matériau inorganique en couches, modifié avec un ou plusieurs composés de modificateur organique ionique, et le mélange du matériau inorganique en couches dans le second solvant à l'étape (ii) aboutit à un gonflement du matériau inorganique en couches, et le mélange des un ou plusieurs complexes de type chélate métallique solubilisés avec le mélange du matériau d'intercalation dans le second solvant à l'étape (iii) aboutit à une intercalation du matériau inorganique en couches avec les un ou plusieurs complexes de type chélate métallique.

11. Méthode de préparation d'un système à libération soutenue, comprenant une microparticule comprenant un matériau d'intercalation et une quantité de plus de 10 % en poids d'un ou plusieurs complexes de type chélate métallique, sur la base du poids total du matériau d'intercalation et des un ou plusieurs complexes de type chélate métallique réunis, comprenant de plus un agent de solubilisation dudit complexe de type chélate métallique dans une quantité d'au maximum 0,5 % en poids sur la base du poids total de la microparticule, selon l'une quelconque des revendications 1, 3 à 9, consistant à :
i) solubiliser les un ou plusieurs complexes de type chélate métallique dans un premier solvant en utilisant un ou plusieurs agents de solubilisation pouvant augmenter la solubilité des un ou plusieurs complexes de type chélate métallique dans le premier solvant, où lesdits un ou plusieurs agents de solubilisation comprennent un ou plusieurs composés modificateurs organiques ioniques pour modifier un matériau inorganique en couches ;
ii) fournir un matériau inorganique en couches, et faire gonfler le matériau inorganique en couches dans un second solvant qui est miscible avec le premier solvant ;
iii) mélanger les un ou plusieurs complexes de type chélate métallique solubilisés avec le matériau inorganique en couches gonflé, en modifiant ainsi le matériau inorganique avec un ou plusieurs composés de modificateur organique ionique et en intercalant le matériau inorganique en couches avec un ou plusieurs complexes de type chélate métallique ;
iv) évaporer le premier et le second solvant ; et
v) optionnellement évaporer l'agent de solubilisation.

12. Méthode selon les revendications 10 ou 11, dans laquelle au moins une partie des une ou plusieurs molécules de modificateur organique ionique est identique ou semblable aux un ou plusieurs agents de solubilisation.

13. Méthode selon l'une quelconque des revendications 10 à 12, dans laquelle les un ou plusieurs agents de solubilisation comprennent une amine, dans laquelle l'amine est de préférence une amine hydrophobe, de manière plus préférée l'amine est une amine hydrophobe sélectionnée parmi le groupe constitué d'une amine alkylique, d'une amine benzylique, et d'une amine allylique, de manière plus préférée l'amine est aromatique.

14. Méthode selon l'une quelconque des revendications 10 à 13, dans laquelle le premier solvant et le second solvant sont sélectionnés parmi le groupe constitué de tétrahydrofurane, toluène, acrylonitrile, éthylacétate, éthanol, isopropanol et de mélanges de l'un quelconque de ces solvants avec de l'eau, et dans laquelle de préférence le premier solvant est le même que le second solvant.

15. Matériau de construction comprenant un système à libération soutenue selon l'une quelconque des revendications 1 à 9, ou un système à libération soutenue pouvant être obtenu par la méthode selon l'une quelconque des revendications 10 à 14,
dans lequel le matériau comprend de préférence de 1 à 60 000 ppm en poids des un ou plusieurs complexes de type chélate métallique, sur la base du poids total du matériau de construction, de préférence de 50 à 60 000 ppm, de manière plus préférée de 50 à 30 000 ppm et/ou dans lequel le matériau est de préférence sous la forme de ciment, plâtre, composé de jointoiement, plaque de plâtre, peinture, colle, matière plastique, papier peint, bois, textile, paille, chaume, contreplaqué, panneau à copeaux orientés, panneau de particules, ou panneaux de fibres de moyenne densité.
